(19)

Europäisches
Patentamt
European
Patent Office
Office européen
des brevets

(11) **EP 4 300 458 A1**

(12) **EUROPEAN PATENT APPLICATION**

(43) Date of publication:
**03.01.2024   Bulletin 2024/01**

(21) Application number: **22181235.7**

(22) Date of filing: **27.06.2022**

(51) International Patent Classification (IPC):
**G08G 1/01** *(2006.01)*       **G08G 1/052** *(2006.01)*
**B60W 30/095** *(2012.01)*

(52) Cooperative Patent Classification (CPC):
**G08G 1/0112; B60W 30/095; G08G 1/0116;**
**G08G 1/0145; G08G 1/052**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventor: **Jansson, Per Leif Jonathan**
**41276 Gothenburg (SE)**

(74) Representative: **Hoffmann Eitle**
**Patent- und Rechtsanwälte PartmbB**
**Arabellastraße 30**
**81925 München (DE)**

(54) **METHOD AND DEVICE FOR DETERMINING AT LEAST ONE CHARACTERISTIC OF A FLOW OF TRAFFIC**

(57)     A computer-implemented method for determining at least one traffic flow characteristic around a host vehicle, the method comprising: detecting a plurality of vehicles in a surrounding environment of the host vehicle from data acquired from at least one sensor system of the host vehicle and/or at least one sensor system located in the surrounding environment of the host vehicle; determining from the acquired sensor data a set of parameters for each of the detected vehicles comprising a parameter indicative of the pose of the detected vehicle and a parameter indicative of the motion of the detected vehicle; determining the at least one traffic flow characteristic based on the set of parameters obtained for the plurality of vehicles; and determining, based on the determined at least one traffic flow characteristic, an adjustment of at least one control functionality of an advanced driving assistance system.

EP 4 300 458 A1

**Description**

[Technical Field]

The present disclosure relates to a computer-implemented method for determining at least one traffic flow characteristic, device for determining at least one traffic flow characteristic, and a host vehicle comprising such a device.

[Background]

Autonomous driving (AD) functionality and, more generally, advanced driver assistance system (ADAS) functionality are features of modern vehicles which have been attracting increasing interest. ADAS functionality may assist a driver in controlling a vehicle by assisting with driving, parking and/or other functions of the vehicle. As a specific aspect of ADAS functionality, autonomous driving functionality may allow the driver of a host vehicle, that is the vehicle to be controlled, to hand over the control of both acceleration and steering of the vehicle to an autonomous driving system, which may be provided with, for example, a target velocity and headway time or more detailed information so as to follow an intended route.

An ADAS may be adapted to react appropriately to other road-users, pedestrians, possible obstacles such as a collision and/or environmental conditions such as heavy rain or snow.

Accordingly, ADASs are generally configured to obtain information from equipment such as sensors in order to collect data about the vehicle and its environment and generate a high-level environment model describing the road on which the vehicle is travelling and the traffic on it.

In particular, modern vehicles typically have sensors such as, for example, one or more of radar sensors, ultrasound sensors, camera sensors, lidar sensors, inertial measurement units, etc. which can be used to monitor and acquire sensor data of the environment, that is the surrounding, of the vehicle and to detect objects in the surrounding.

Identifying road users that are performing manoeuvres diverging from the general traffic flow is of interest in many ADAS and AD applications.

For example, some implementations of adaptive cruise control (ACC) aim to adapt to vehicles that are cutting in or out from the host lane, that is the lane of a road in which a host vehicle is driving. Meanwhile, some implementations of automatic emergency braking (AEB) benefit from the knowledge of any road users that intend to cross the future path of the host vehicle.

Prior solutions for identifying these critical road users are generally based on the individual road users position and motion in relation to lane markings of the host-lane.

Furthermore, manoeuvring on a road in general, for example, following a lane or performing a lane change, is a central component of AD and ADAS functionalities. In order to automatically manoeuvre on a road, a reference which to adapt to is required. This reference generally consists of lane markings of the host-lane.

In currently used ADAS functions, a vehicle may determine its position with respect to the road lanes based on the data received from its own onboard sensors. Such a self-positioning is based on the detection of lane markings or lines painted on the road and in some cases also road barriers. These lane markings are generally identified through camera based perception systems that identify lane markings in images. Based on these detections, a road model is created, being a part of the vehicle's wider surrounding model.

By way of example, in the paper entitled "In Fused Front Lane Trajectory Estimation Based on Current ADAS Sensor Configuration" (2020 4th CAA International Conference on Vehicular Control and Intelligence (CVCI), 2020, pp. 124-129), Y. Liu et al. disclose a scalable approach to lane tracking for ADAS applications. The approach highlights the necessity of the information about the host lane ahead in current ADAS solutions.

In summary, the safety and comfort of conventional AD and ADAS functionalities are dependent on the knowledge of lane markings of the host lane. However, the use of lane markings in conventional approaches has some limitations.

One limitation may arise in handling scenarios when it is not possible to identify any lane markings. This could be in scenarios when there are no lane markings available or when the existing lane markings are occluded from view of the camera system.

For example, the distance range over which lane lines are visible in the vision stream, i.e. discernible by the vehicle's sensors, may be limited by the resolution of the applied cameras and other sensors deployed in the vehicle, such that traffic lane estimation with sufficient precision is only achievable within several dozen meters ahead. In case of heavier traffic on a given road segment, such as in the presence of traffic jams, visibility may be further limited only to a few meters.

Furthermore, the lines on the road may be of a poor quality. For example, painted lines may be rubbed off or fade over long periods of time between repainting. Such lines may also be poorly visible at night, during fog or in the winter due to the snow covering the road. This may lead to many ambiguities which is a great challenge for ADAS, particularly vision safety features.

A more complex problem arises in scenarios such as construction zones or crossings where multiple sets of lane markings exist, or the existing lane markings are obsolete.

A further limitation may arise in that, even in cases where lane markings can be readily and accurately tracked, it is a complex task to define which road users are relevant or even critical for a certain application. This problem becomes even harder when there is no information available about the shape of the road or lanes, for example, in systems without cameras, or in construction zones and in urban driving where lane markings might be missing, replaced or even meant to be neglected.

Accordingly, some attempts have been made to overcome the dependency of ADAS and AD functionalities on lane markings.

By way of example, in the above-mentioned paper "Fused Front Lane Trajectory Estimation Based on Current ADAS Sensor Configuration", the authors present a fallback strategy for when a camera based lane marking estimation system fails to deliver sufficient information. This strategy is to use the motion of the host-vehicle and surrounding vehicles ahead as an observation of the curvature of the host-lane.

Furthermore, in the paper entitled "Lane estimation using lateral histogram in radar based ACC system" (2014 11th European Radar Conference, 2014, pp. 193-196), S. -K. Park et al. disclose a radar only ACC system solution and, in the paper entitled "Lane Change Intention Classification of Surrounding Vehicles Utilizing Open Set Recognition" (IEEE Access, vol. 9, pp. 57589-57602, 2021), D. J. Kim et al. disclose another radar only solution for predicting vehicles cutting in and out of the host-lane.

However, all of these solutions attempt to define the surrounding of the vehicle in relation to a host-lane and, as such, are still subject to various limitations.

By way of example, all of these solutions assume a constant curvature model for the host vehicle's motion, and that all paths on the road ahead are parallel. These assumptions makes the solutions viable for low curvature scenarios, but can introduce complications when manoeuvring more complex road-shapes.

Furthermore, all of these solutions utilize the motion of all vehicles ahead in all scenarios. This may cause issues when there are diverging road paths, such as off-ramps, or when vehicles are changing lanes.

Therefore, it is an object of the aspects disclosed herein to address one or more of the above-identified disadvantages with conventional approaches.

[Summary]

There is disclosed herein, in accordance with embodiments of a first aspect of the present disclosure, a computer-implemented method for determining at least one traffic flow characteristic around a host vehicle. The method comprises detecting a plurality of vehicles in a surrounding environment of the host vehicle from data acquired from at least one sensor system of the host vehicle and/or at least one sensor system located in the surrounding environment of the host vehicle. The method further comprises determining from the acquired sensor data a set of parameters for each of the detected vehicles comprising a parameter indicative of the pose of the detected vehicle and a parameter indicative of the motion of the detected vehicle. The method further comprises determining the at least one traffic flow characteristic based on the set of parameters obtained for the plurality of vehicles. The method further comprises determining, based on the determined at least one traffic flow characteristic, an adjustment of at least one control functionality of an advanced driving assistance system.

Determining the at least one traffic flow characteristic may comprises at least one of: identifying one or more road paths of a road; determining at least one convoy, each of the at least one convoy comprising two or more of the detected plurality of vehicles; determining a vehicle among the plurality of vehicles that follows the traffic flow; and determining a vehicle among the plurality of vehicles that diverges from the traffic flow.

Determining the at least one traffic flow characteristic may comprise identifying one or more road paths of a road. The adjustment of the at least one control functionality of the advanced driving assistance system may comprise controlling, by the advanced driving assistance system, a host vehicle to follow one of the identified one or more road paths.

The method according to the first aspect may further comprise comparing a model of the road comprising a plurality of lanes to the identified one or more road paths and updating the model of the road based on the comparison.

The method according to the first aspect may further comprise generating a new model of the road based on the identified one or more road paths.

The adjustment of the at least one control functionality of the advanced driving assistance system may comprise controlling, by the advanced driving assistance system, a host vehicle to follow one of the identified one or more road paths.

The method according to the first aspect may further comprise determining, in a case where a vehicle among the plurality of vehicles is comprised in a convoy, that the vehicle follows the traffic flow.

The method according to the first aspect may further comprise determining, in a case where a vehicle among the plurality of vehicles is not comprised in a convoy, that the vehicle diverges from the traffic flow.

The method according to the first aspect may further comprise determining, for each vehicle that diverges from the traffic flow, whether the vehicle is moving from one road path to another based on the at least one convoy.

The method according to the first aspect may further comprise, for each vehicle of the plurality of vehicles: determining a target area in the surrounding environment of that vehicle; and associating that vehicle with another vehicle, from among vehicles detected in a target area of that vehicle.

For each vehicle of the plurality of vehicles, the target area may extend in a predetermined direction in relation to that vehicle.

For each vehicle of the plurality of vehicles, the target area may be variably defined based on the set of parameters determined for that vehicle.

For each vehicle of the plurality of vehicles, the target area may be defined such that a range of the target area in the direction of travel of the vehicle increases with increasing speed.

Additionally or alternatively, for each vehicle of the plurality of vehicles, the target area may be defined such that a range of the target area in a direction perpendicular to the direction of travel of the vehicle increases with increasing heading rate.

Associating each vehicle of the plurality of vehicles with another vehicle may comprise prioritizing the vehicles detected in the target area based on the set of parameters determined for those vehicles.

Each of the at least one convoy may comprise a chain of vehicles in which each vehicle is associated with only one vehicle detected in the target area.

Prioritizing the vehicles detected in the target area may comprise selecting only vehicles that meet a predetermined criterion based on the set of parameters determined for those vehicles.

Prioritizing the vehicles detected in the target area may comprise calculating, for each of the vehicles detected in the target area of the vehicle, a value indicative of a motional difference and/or a pose difference relative to the vehicle.

The value indicative of a motional difference and/or a pose difference relative to the vehicle may be calculated based on at least one of: a difference in direction relative to the vehicle; a difference in heading rate relative to the vehicle; a difference in distance relative to the vehicle; a difference in velocity relative to the vehicle; and a difference in acceleration relative to the vehicle.

There is disclosed herein, in accordance with embodiments of a second aspect of the present disclosure, a computer program comprising instructions which, when executed by a computer, cause the computer to carry out a method according to embodiments of a first aspect of the present disclosure.

There is disclosed herein, in accordance with embodiments of a third aspect of the present disclosure, a device for determining at least one traffic flow characteristic around a host vehicle. The device is configured to perform a method according to embodiments of the first aspect of the present disclosure.

There is disclosed herein, in accordance with embodiments of a fourth aspect of the present disclosure, a host vehicle comprising a device according to embodiments of a third aspect of the present disclosure. The host vehicle further comprises at least one of: at least one sensor system and an advanced driving assistance system.

The aspects disclosed herein determine at least one traffic flow characteristic which is used to determine an adjustment of at least one control functionality of an advanced driving assistance system. In this way, it is possible to provide the ADAS with an indication of the traffic flow around a host vehicle in a manner which is readily interpretable and usable by the ADAS.

In particular, the method of the first aspect may enable the ADAS to make assumptions about the traffic flow around the host vehicle based on the at least one traffic flow characteristic. This may be achieved without requiring the ADAS to rely on knowledge of lane markings and, more generally, without requiring the environment of the host vehicle to be defined in relation to a host lane.

Furthermore, in contrast to existing solutions, the aspects disclosed herein may enable the ADAS to make assumptions about the flow of traffic in situations in which a constant curvature model for a vehicle's motion and/or that all paths on the road ahead are parallel cannot be assumed. Therefore, it may be possible to identify diverging road paths, such as off-ramps and to model road-path forms that do not have a constant curvature, such as s-shaped roads or scenarios where a straight road starts to curve.

The aspects disclosed herein may also avoid that the motion of all detected vehicles, particularly those diverging from the traffic flow, are used in order to estimate the traffic flow in the environment of a vehicle.

In particular, aspects of the present inventive may enable distinguishing between vehicles determined to be part of a convoy, which may be useful to estimate the traffic flow, and vehicles diverging from the traffic flow, such as a vehicle changing lanes.

Such information may, in turn, enable the ADAS to identify important or critical events.

[Brief Description of the Drawings]

Embodiments of the disclosure will now be explained in detail, by way of non-limiting example only, with reference to the accompanying figures, described below. Like reference numerals appearing in different ones of the figures can denote identical or functionally similar elements, unless indicated otherwise.

Figure 1 is a schematic illustration of a device for determining at least one traffic flow characteristic, according to an example embodiment herein.

Figure 2 is a schematic illustration of a vehicle comprising a device as shown in Figure 1, according to an example embodiment herein.

Figure 3 is a schematic illustration of programmable signal processing apparatus, which may be configured to implement the functionality of the device of Figure 1.

Figure 4 is a flow diagram illustrating a process by which the device of Figure 1 may determine at least one traffic flow characteristic, in accordance with an example embodiment herein.

Figure 5 is a schematic illustration of a target area of a vehicle, in accordance with an example herein.

Figure 6 is a schematic illustration illustrating a specific example for calculation of the target area of a vehicle, in accordance with an example herein.

Figures 7A and 7B are schematic illustrations illustrating a specific example for calculation of a value indicative of a motional difference and/or a pose difference relative to a vehicle under consideration, in accordance with an example herein.

Figure 8 is a flow diagram illustrating an exemplary process by which the device of Figure 1 may determine the at least one convoy based on the acquired sensor data, in accordance with an example embodiment herein.

Figure 9 is schematic illustration showing a scenario in which a vehicle ahead of a host vehicle and in the same road path as the host vehicle is diverging from the flow of traffic.

Figure 10 is schematic illustration showing a scenario in which vehicles navigate a roundabout, where one vehicle is exiting early.

Figure 11 is schematic illustration showing a scenario in which there are two diverging road paths ahead of a host vehicle travelling on a road.

[Detailed Description]

Embodiments of the present disclosure will now be described in reference to the enclosed figures. In the following detailed description, numerous specific details are set forth. These specific details are only to provide a thorough understanding of the various described embodiments. Further, although the terms first, second, etc. may be used to describe various elements, these elements should not be limited by these terms. These terms are only used to distinguish one element from another.

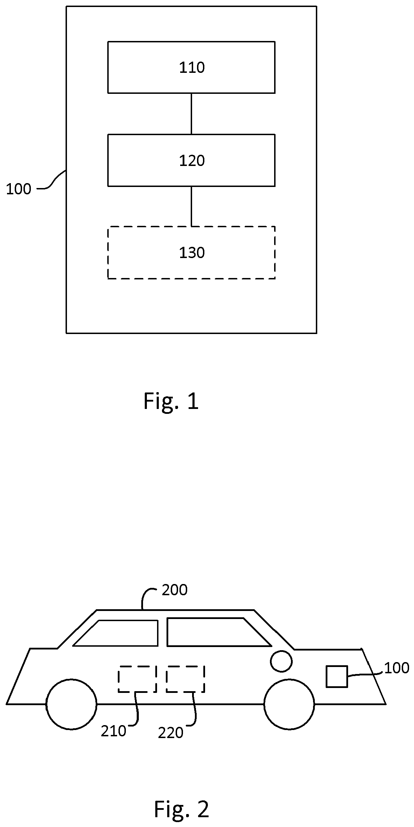

Figure 1 is a schematic illustration of a device 100 for determining at least one traffic flow characteristic around a host vehicle. The device 100 may, as in the present example embodiment, comprise a detecting unit 110, a determining unit 120 and an outputting unit 130.

The traffic flow, also referred to as the flow of traffic, may describe the overall interactions between travellers including vehicles and their drivers, as well as pedestrians, cyclists, etc. and infrastructure, such as roads, using characteristics such as speed, flow, and concentration.

The device 100 may, as in the present example embodiment, be provided in a vehicle, such as exemplary vehicle 200 shown in Figure 2. The vehicle 200 may be any land vehicle that is moved by machine power. Such a vehicle 200 may also be tied to railroad tracks, floating, diving or airborne. The figures exemplify this vehicle 200 as a car, with which the device 100 is provided. The present disclosure is, however, not limited thereto. Hence, the device 100 may also be mounted to e.g. a lorry, a truck, a farming vehicle, a motorbike, a train, a bus, an aircraft, a drone, a boat, a ship, a robot or the like.

As shown in Figure 2, the vehicle 200 may, as in the present example embodiment, optionally comprise at least one sensor system 210, optional elements being indicated by dashed lines unless otherwise stated.

By way of example, the at least one sensor system 210 may comprise one or more of radar sensors, ultrasound sensors, camera sensors, lidar sensors, inertial measurement units, etc. which can be used to monitor and acquire sensor data of the environment, that is the surrounding, of the vehicle and to detect objects in the surrounding. The at least one sensor system 210 may, as in the present example embodiment, comprise one or more additional onboard sensors suitable for determining, for example, the direction of travel, velocity, acceleration, yaw rate, etc. of the vehicle 200.

Additionally or alternatively, as shown in Figure 2, the vehicle 200 may, as in the present example embodiment, optionally comprise an advanced driving assistance system (ADAS) 220. In this case, the vehicle 200 may be considered to be a host vehicle, also referred to as an ego vehicle or vehicle to be controlled.

The ADAS 220 may, as in the present example embodiment, provide an ADAS functionality to assist a driver in controlling the vehicle 200 by assisting with driving, parking and/or other functions of the vehicle 200. By way of example, the ADAS 220 may provide an autonomous driving functionality, that allows the driver of the vehicle 200 to hand over the control of acceleration and/or steering of the vehicle to the ADAS, which may be provided with, for example, a target velocity and headway time or more detailed information so as to follow an intended route.

In the example embodiment shown in Figure 1, the device 100, the at least one sensor system 210 and the ADAS 220 are shown as separate elements. However, all or some of these elements may be provided as a single unit. By way of example, the device 100 may be provided as part of the ADAS 220 or as part of the at least one sensor system 210.

Alternatively, the device 100 may be not be provided in a vehicle and, by way of example, may be provided in a server, provided as part of a cloud based system, or implemented by a virtual network.

Furthermore, while Figure 1 shows units 110, 120 and 130 as being provided in a single entity, such an implementation is for illustrative purposes only and is non-limiting. In particular, the device 100 may be implemented across one or more physical or virtual computing devices, each of which may implement part of the function of one of the units 110, 120 and 130 or implement the functions one or more of the units 110, 120, and 130. By way of example, the detecting unit 110 may be implemented in a server that receives data from multiple vehicles and the determining unit 120 and the outputting unit 130 may be implemented in a vehicle having an ADAS or respectively implemented in multiple vehicles, each having a respective ADAS.

More generally, the device 100 may be implemented by any suitable computing means known to those skilled in the art.

The detecting unit 110 may be configured to detect a plurality of vehicles in a surrounding environment of the host vehicle from data acquired from at least one sensor system of the host vehicle and/or at least one sensor system located in the surrounding environment of the host vehicle. The data acquired from the at least one sensor system of the host vehicle and/or at least one sensor system located in the surrounding environment of the host vehicle may also be referred to herein as the acquired sensor data.

The host vehicle may, as in the present example embodiment, be the vehicle 200 of Figure 2. Alternatively, in example embodiments in which the device 100 is not provided in a vehicle or in which the vehicle 200 does not include the ADAS system, the device 100 may analyse the environment of any suitable host vehicle for which sensor data may be acquired.

The at least one vehicle may, as in the present example embodiment, be the vehicle 200 of Figure 2 and the at least one sensor system may, as in the present example embodiment, be the at least one sensor system 210 of the vehicle 200 of Figure 2. In such example embodiments, the detecting unit 110 may directly acquire the data from the at least one sensor system 210.

Alternatively, in example embodiments in which the vehicle 200 does not include the at least one sensor system 210 or embodiments in which the device 100 is not provided in a vehicle, the detecting unit 110 may be configured to acquire the data in any suitable form and from any suitable entity by any suitable means known to those in the art.

More generally, sensor data may be acquired from the host vehicle, one or more vehicles different from the host vehicle, such as vehicles in the surrounding of the host vehicle, from non-vehicle road-users such as GPS data of pedestrians or cyclists, or from roadside infrastructure.

For example, the detecting unit 110 may receive the data from the at least one sensor system. By way of alternative example, the detecting unit 110 may receive the data from a server or other entity, which has previously received the data from the at least one sensor system. In such example embodiments, the device 100 may be provided with any suitable wired or wireless communication means known to those skilled in the art to facilitate receiving the data from the at least one vehicle or other entity.

Such communication means may perform communication in accordance with, for example, V2I-based technology, such as Dedicated Short Range Communication (DSRC) or Impulse-Radio Ultrawideband technology (IR-UWB) or any other suitable cellular-based or WLAN-based technology. Furthermore, in such example embodiments, the data may be acquired by the detecting unit 110 directly from such communication means or the received data may be stored in a memory accessible to the detecting unit 110 and acquired from the memory by the detecting unit 110.

The detecting unit 110 may be configured to detect the plurality of vehicles from the data by any suitable means known to those skilled in the art and the data may be of any suitable type that allows vehicles in an environment of the at least one sensor system to be detected. For example, the data may comprise detection results from any suitable sensor system including one or more of radar sensors, ultrasound sensors, camera sensors, lidar sensors, inertial measurement units, etc.

Furthermore, the data may be subject to any suitable processing known to those skilled in the art by the detecting unit 110 or another unit of the device 100 prior to being used for detecting the plurality of vehicles or by another entity prior to being acquired by the detecting unit 110.

The determining unit 120 may be configured to determine from the acquired sensor data a set of parameters for each of the detected vehicles comprising a parameter indicative of the pose of the detected vehicle and a parameter indicative of the motion of the detected vehicle. The determining unit 120 may be further configured to determine the at least one traffic flow characteristic of the flow of traffic based on the set of parameters obtained for the plurality of vehicles. The determining unit 120 may be further configured to determine, based on the determined at least one traffic flow characteristic, an adjustment of at least one control functionality of an advanced driving assistance system.

As will be appreciated to those skilled in the art, data acquired from at least one sensor system suitable to allow vehicles in an environment of the at least one sensor system to be detected typically allows information to the pose and motion of the detected vehicles to be derived. The pose of a detected vehicle may be defined as the position and orientation of said vehicle.

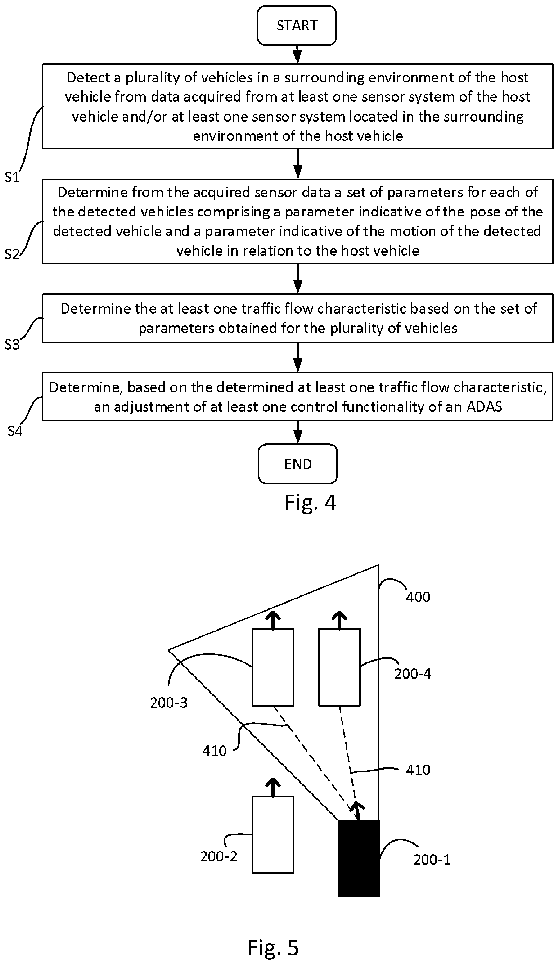

Accordingly, as will be described in more detail in relation to Figure 4 below, the acquired sensor data may be used by the determining unit 120 to determine the at least one traffic flow characteristic and, in turn, the adjustment of at least one control functionality of an ADAS.

An outputting unit 130 may optionally be provided to output information to other entities, such as information indicative of the at least one traffic flow characteristic or information indicative of the adjustment.

The outputting unit 130 may be configured to output information in any suitable manner and in any form suitable for transmission, storage, and/or further processing.

The ADAS may, by way of example, be the ADAS of the host vehicle. Alternatively, the ADAS may be an ADAS of a vehicle other than the host vehicle, such as a vehicle in the surrounding of the host vehicle and which experiences a same or similar traffic flow to the host vehicle.

The ADAS may, as in the present example embodiment, be the ADAS 220 of the vehicle 200 shown in Figure 2 and the outputting unit 130 may be configured, for example, to output information indicative of the adjustment to the ADAS 220 directly. Alternatively, the outputting unit 130 may be configured to output the information indicative of the adjustment to the ADAS 220 indirectly by, for example, storing the at least one characteristic in any suitable form in a memory accessible to the ADAS 200.

By way of further alternative, in example embodiments in which the vehicle 200 does not include the ADAS 220 or embodiments in which the device 100 is not provided in a vehicle, the outputting unit 130 may, for example, be configured to output information indicative of the adjustment to an ADAS by transmitting the information directly to communication means of the ADAS or a vehicle in which the ADAS is provided. Alternatively, the outputting unit 130 may be configured to output the information to an ADAS by indirectly transmitting the information via a server or other such entity. In such example embodiments, the device 100 may be provided with any suitable wired or wireless communication means as discussed above in relation to the detecting unit 110.

Additionally, the outputting unit 130 may in some example embodiments be configured to output information indicative of the adjustment to multiple ADASs.

By way of example, in a case where the device 100 is implemented in a cloud based system, outputting unit 130 may be configured to output information indicative of the adjustment to two or more ADAS for use in controlling an advanced driving assistance functionality by each ADAS in their respective vehicles. By way of alternative example, in cases where the device 100 is provided in a vehicle having an ADAS such as vehicle 200 of Figure 2, the outputting unit 130 may be configured to output the information to the ADAS of the vehicle in which it provided, as well as directly or indirectly transmitting the information to one or more additional vehicles.

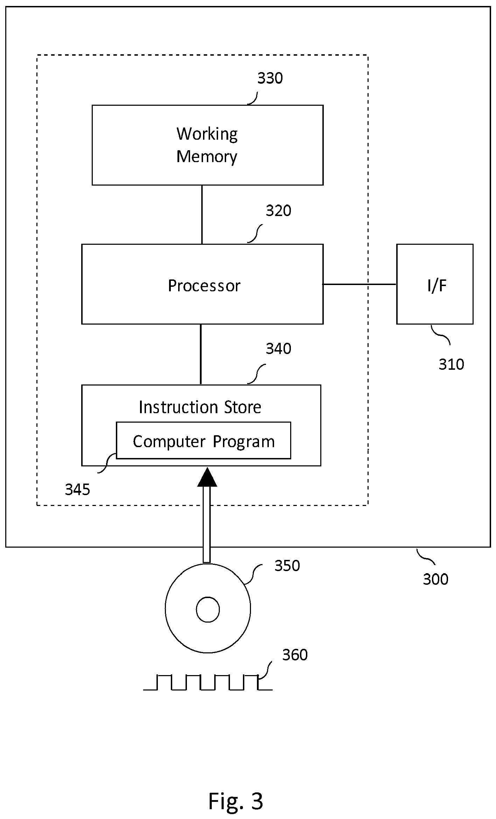

Figure 3 is a schematic illustration of programmable signal processing apparatus 300, which may be configured to implement the functionality of the device 100 of Figure 1.

The signal processing apparatus 300 has an interface module 310 providing means, e.g. one or more antennae or wired connections, for transmitting and receiving information. The signal processing apparatus 300 also has a processor 320, e.g. a CPU, for controlling the programmable signal processing apparatus 300 to perform the functions of the device 100, a working memory 330, e.g. a random-access memory, and an instruction store 340 storing a computer program 345 having computer-readable instructions which, when executed by the processor 320, cause the processor 320 to perform the functions of the device 100.

The instruction store 340 may include a ROM, e.g. in the form of an electrically-erasable programmable read-only memory (EEPROM) or flash memory, which is pre-loaded with the computer-readable instructions. Alternatively, the instruction store 340 may include a RAM or similar type of memory, and the computer-readable instructions can be input thereto from a computer program product, such as a computer-readable storage medium 350 such as a CD-ROM, etc. or a computer-readable signal 360 carrying the computer-readable instructions.

The device 100 may alternatively be implemented in non-programmable hardware, such as an application-specific integrated circuit (ASIC) or in any other suitable manner, using any suitable combination of hardware and software components.

Figure 4 is a flow diagram illustrating a process by which the device 100 of Figure 1 may determine at least one traffic flow characteristic around a host vehicle, in accordance with an example embodiment herein.

In process step S1 of Figure 4, the detecting unit 100 detects a plurality of vehicles in a surrounding environment of the host vehicle from data acquired from at least one sensor system of the host vehicle and/or at least one sensor system located in the surrounding environment of the host vehicle.

The detecting unit 110 may be configured to acquire the sensor data and to detect a plurality of vehicles from the data by any of the means discussed above in relation to Figure 1.

By way of example, the plurality of vehicles may be any of the vehicles 200-1 to 200-24 shown in Figures 5, 7A, 7B, and 9 to 11. Except where it is necessary to distinguish between these vehicles, each vehicle may be referred to herein as vehicle 200-i or plurality of vehicles 200-1.

It may be appreciated that the number of vehicles that may be detectable from the data may be dependent on the properties of the at least one sensor system from which the data is acquired, e.g. range, resolution, etc., as well as the situation of the at least one vehicle comprising the at least one sensor system. For example, in a case of heavier traffic on a given road segment, e.g. in the presence of traffic jams, the range of some sensors may be limited only to a few meters due to lack of clear visibility given the high proximity of other vehicles. As such, there is no particular limitation on the number of vehicles to be detected.

However, for example, it may be required to detect at least two vehicles in order for a convoy of the flow of traffic to be determined. Additionally or alternatively, it may be required to detect at least one vehicle in order to determine other characteristics of the flow of traffic. This may fail to occur, by way of example, where the at least one vehicle, from which sensor data is acquired, is travelling on remote or isolated roads with little or no traffic.

As such, in cases where one vehicle or no vehicles are detected in the data acquired from the at least one sensor system of the host vehicle and/or at least one sensor system located in the surrounding environment of the host vehicle, the detecting unit 110 may, for example, be configured to repeat acquiring data and detecting vehicles from the data until data is acquired in which a suitable number of vehicles are detectable. Such repeating may be performed at regular time intervals or irregularly as new data becomes available from the at least one sensor system of the at least one vehicle.

In process step S2 of Figure 4, the determining unit 120 determines from the acquired sensor data a set of parameters for each of the detected vehicles comprising a parameter indicative of the pose of the detected vehicle and a parameter indicative of the motion of the detected vehicle.

The parameter indicative of the pose of a detected vehicle may comprise any suitable value, combination of values or other information that indicate the position and orientation of the detected vehicle in question. By way of example, the parameter indicative of the pose of a detected vehicle may be defined in any suitable coordinate system in which the position and orientation of the host vehicle is known and may indicate the absolute position and orientation of that vehicle or the position and orientation of that vehicle relative to a particular reference, such as, for example, the position and orientation of the host vehicle.

Similarly, the parameter indicative of the motion of a detected vehicle may be defined in any suitable coordinate system and may comprise any suitable value, combination of values or other information that indicate the motion of the detected vehicle in question, such as one or more of acceleration, velocity, etc.

The set of parameters may, as in the present example embodiment, include any additional suitable parameters derivable from the sensor data. By way of example, the set of parameters may include a detection period, i.e. an amount of time for which a detected vehicle is consistently or repeatedly detected from the acquired sensor data or parameters indicative of the consistency of a detected vehicle's pose or motion over time.

In process step S3 of Figure 4, the determining unit 120 determines the at least one traffic flow characteristic based on the set of parameters obtained for the plurality of vehicles.

The at least one traffic flow characteristic may comprise any information indicative of the traffic flow around a host vehicle which is interpretable and usable by the ADAS. The at least one traffic flow characteristic may enable the ADAS to make assumptions about the traffic flow around the host vehicle.

By way of example, determining the at least one traffic flow characteristic may comprises at least one of (i) identifying one or more road paths of a road, (ii) determining at least one convoy, each of the at least one convoy comprising two or more of the detected plurality of vehicles, (iii) determining a vehicle among the plurality of vehicles that follows the traffic flow, and (iv) determining a vehicle among the plurality of vehicles that diverges from the traffic flow.

The following examples relate to cases in which the at least one traffic flow characteristic comprises at least one convoy. Examples of other traffic flow characteristics will be discussed subsequently.

A convoy may, for example, be considered as two or more vehicles travelling together in a line or as a chain of two or more vehicles, in which each vehicle follows a single other vehicle and/or is followed by a single other vehicle. As such, vehicles travelling in a convoy may show a relatively high level similarity in motion and/or pose relative to vehicles not travelling in that convoy.

While vehicles may be deliberately controlled by their respective drivers or ADAS to travel in a convoy, the traffic flow may also include vehicles unintentionally travelling in at least one convoy due to overlap in their intended routes, a limited number of road paths that can be followed, etc. Therefore, in the present disclosure, the term convoy is not limited to groups of vehicles intentionally travelling together for a particular purpose, e.g. security.

Accordingly, process step S3 of Figure 4 may, as in the present example, include steps of processing the set of parameters determined for each of the detected vehicles 200-1 in order to identify a vehicle that follows another vehicle among the plurality of detected vehicles 200-1.

For example, the process of Figure 4 may, as in the present example embodiment, include additional optional process steps in which, for each vehicle of the plurality of vehicles 200-1, the device 100 determines a target area in the surrounding environment of that vehicle 200-i and associates that vehicle 200-i with another vehicle, from among vehicles detected in a target area of that vehicle, such as area 400 of vehicle 200-1 shown in Figure 5.

By way of further example, such process steps may be performed in advance of the determining unit performing process step S3 of the Figure 4. Furthermore, such a process step may be performed by, for example, the detecting unit 110, the determining unit 120, or a dedicated unit in the device 100 (not shown in Figures).

For each vehicle 200-i of the plurality of vehicles 200-1, the target area may, as in the present example embodiment, extend in a predetermined direction in relation to that vehicle. By way of example, the target area may extend ahead of the vehicle 200-i in a direction of travel of the vehicle 200-i, to the rear of the vehicle 200-i in a direction opposite to its direction of travel, and/or to the sides of the vehicle 200-i at least one directions perpendicular to its direction of travel.

The target area may be defined in any suitable manner. By way of example, the target area of each vehicle 200-i may be defined as an area of a fixed size extending ahead of that vehicle in its direction of travel. Alternatively, the target area of each vehicle 200-i may be defined as an area of a fixed size extending around the vehicle in all directions.

Alternatively, the target area may be defined so as to have a variable size, which may be dependent on the motion and pose of the vehicle. That is, the target area of a vehicle 200-i may be variably defined based on the set of parameters determined for that vehicle 200-i.

By way of example, for each vehicle 200-i of the plurality of vehicles 200-1, the target area may be defined such that a range of the target area in the direction of travel of the vehicle 200-i increases with increasing speed. This may be advantageous because a vehicle travelling at a higher speed generally requires a greater braking distance and, as such, maintains a greater distance from a vehicle it is following compared a distance maintained between two vehicles travelling at a lower speed.

As such, increasing the range of the target area in the direction of travel of the vehicle 200-i with increasing speed may help to ensure that a preceding vehicle in a convoy may be reliably identified, even where a large braking distance is required, while avoiding an excessively large target area when the vehicle is travelling at lower speed. This may in turn help to avoid an excessive number of irrelevant vehicles being included in the target area when the vehicle is travelling at lower speed.

Additionally or alternatively, for each vehicle 200-i of the plurality of vehicles 200-1, the target area may be defined such that a range of the target area in a direction perpendicular to the direction of travel of the vehicle 200-i increases with increasing heading rate. More specifically, the target area is defined such that a range of the target area is increased in the direction of the increasing heading rate.

This may be advantageous because an increasing heading rate may be the result of a vehicle moving perpendicular to its direction of travel, i.e. when the vehicle performs a lateral movement such as is associated with travelling on a curved road path or changing lanes. As such, defining the target area in this manner may help to ensure that potentially relevant vehicles are more reliably detected within the target area of the vehicle 200-i.

Additionally or alternatively, any other suitable parameters may be taken into account in defining the target area of a vehicle 200-i. Furthermore, these parameters may be weighted relative to one another in any suitable manner.

In example embodiments in which the process of Figure 4 includes the process step in which, for each vehicle 200-i of the plurality of vehicles 200-1, the device 100 associates that vehicle 200-i with another vehicle, from among vehicles detected in a target area of that vehicle 200-i. In such example embodiments, the resulting at least one convoy may comprise two or more of the associated vehicles.

This may be advantageous in that the at least one convoy will only include vehicles which appear to have a following relationship with another vehicle among the detected vehicles and, in turn, it may be avoided that the motion of all detected vehicles, particularly those diverging from the traffic flow, are used in order to estimate the traffic flow in the environment of a vehicle.

By way of example, Figure 5 is a schematic illustration of a target area 400 of a vehicle 200-1, in accordance with an example herein.

In the example shown in Figure 5, the plurality of detected vehicles includes vehicles 200-1 to 200-4, of which vehicle 200-1 is under consideration. The vehicle under consideration is a vehicle for which, at a given time, a target area is defined, vehicles within that target area are identified and one of these vehicles may be associated with the vehicle under consideration.

The direction of travel of each of the vehicles 200-1 to 200-4 is indicated by a bold arrow. As shown in Figure 5, the direction of travel of vehicle 200-1 is veering towards the left and, as such, the heading rate to the left results in a correspondingly shifted target area.

As shown in Figure 5, vehicles 200-3 and 200-4 are detected in the target area 400 of vehicle 200-1, as indicated by dashed arrows 410. As shown in Figure 5, vehicle 200-2 is not detected in the target area 400 of vehicle 200-1 of Figure 2.

Although, not shown in Figure 5, the target area may be defined, and the vehicles detected therein identified, for each of vehicles 200-2, 200-3 and 200-4 as well.

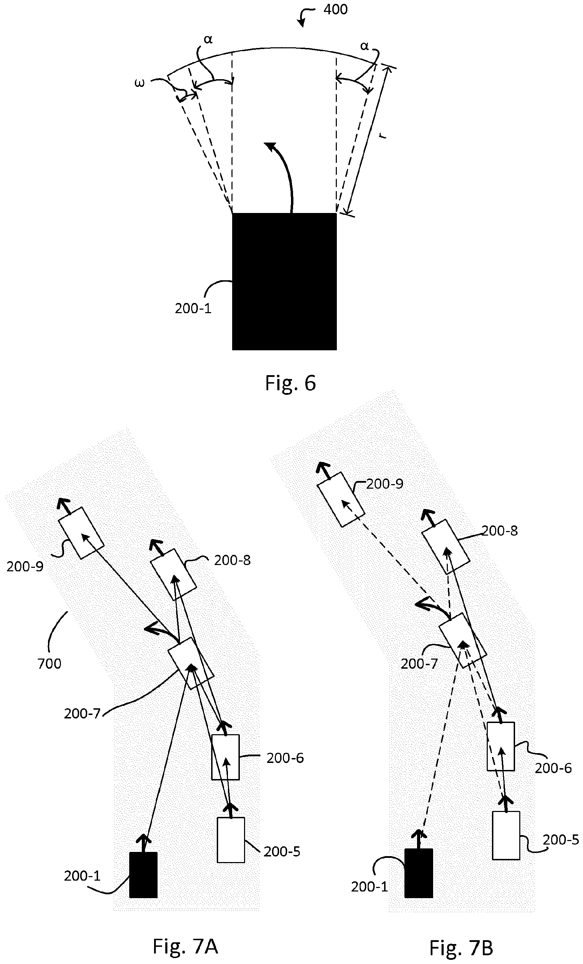

A specific example for calculation of the target area of a vehicle 200-i will be described in relation to Figure 6.

In the example of Figure 6, the target area is defined by three calibration parameters $\alpha$, $\beta$ and $\delta$. $\alpha$ defines the angle of the field of view of the target area in degrees. $\beta$, defined in seconds, acts as a time-horizon for the heading-rate $\varphi$ of the vehicle 200-i measured in degrees/second.

The heading-horizon angle $\omega$, in degrees, of the target area may then be defined using the following equation:

$$\omega \ = \ \beta \ \times \ \varphi \qquad\qquad \text{Eq. 1}$$

In particular, $\omega$ expands the range of the target area in a direction perpendicular to the direction of travel of the vehicle 200-i only in the direction of the heading-rate.

$\delta$, defined in seconds, acts as a time-horizon for the velocity $v$ of the vehicle 200-i measured in meters/second.

Thus the range r measured in meters of the target area in the direction of travel is defined by the position-horizon using the following equation:

$$r \ = \ \delta \ \times \ v. \qquad\qquad \text{Eq. 2}$$

The values of the three calibration parameters may be determined based on the technical experience and knowledge of the vehicle in question. By way of example, the values of the three calibration parameters may, as in the example of Figure 6, be defined within the intervals:

$\alpha \in [0,45]$,
$\beta \in [0,5]$,
$\delta \in [0.5,5]$.

In the example shown in Figure 5, at least one vehicle is detected in the target area of the vehicle 200-1 under consideration. However, a case may also arise in which no vehicle is detected in the target area of the vehicle under consideration and, as such, the vehicle under consideration may not be associated with another vehicle. Furthermore, as will be discussed in more detail below, in some example embodiments, the device 100 may be configured to determine whether each vehicle detected in the target area meets a predetermined criterion before associating one of the these vehicles with the vehicle under consideration. In such example embodiments, a case may arise in which none of the vehicles detected in the target area of the vehicle under consideration meet the criterion and, as such, the vehicle under consideration may not be associated with another vehicle.

In a case where a single other vehicle is included in the target area of a given vehicle 200-i, that single other vehicle may simply be selected as the another vehicle to be associated with the given vehicle 200-i.

However, as shown in the example of Figure 5, it is possible that multiple vehicles are detected in the target area of a given vehicle. In such examples, the device 100 may be configured with suitable means to determine which of these vehicles should be selected as the another vehicle to be associated with the given vehicle 200-i. For example, in Figure 5, one of vehicle 200-3 and vehicle 200-4 may be selected to be associated with vehicle 200-1.

By way of example, associating each vehicle of the plurality of vehicles with another vehicle may, as in the present example embodiment, comprise prioritizing the vehicles detected in the target area based on the set of parameters determined for those vehicles.

That is, as discussed above, a convoy may, for example, be considered as two or more vehicles travelling together in a line. In this way, while a vehicle travels as part of the convoy, that vehicle travels a same or substantially same route as other vehicles in the convoy. A such, vehicles travelling in a convoy may show a relatively high level of similarity of motion and/or pose relative to vehicles not travelling in that convoy.

Such similarity may be determined using the set of parameters determined for each vehicle, which include a parameter indicative of the pose of the detected vehicle and a parameter indicative of the motion of the detected vehicle. By way of example, priority may be given to a vehicle having a most similar motion and pose to the vehicle under consideration.

Accordingly, in such example embodiments, each of the at least one convoy may then comprise a chain of vehicles in which each vehicle is associated with only one vehicle detected in the target area. This may advantageously allow easy and convenient recognition of vehicles that follow the flow of traffic.

By way of example, in the example of Figure 5, the device 100 may determine which of vehicle 200-3 and vehicle 200-4 has a higher similarity in motion and pose to vehicle 200-1 under consideration.

The device 100 may be configured to prioritize the vehicles detected in the target area based on the set of parameters determined for those vehicles in any suitable way.

By way of example, prioritizing the vehicles detected in the target area may, as in the present example embodiment, comprise calculating, for each of the vehicles detected in the target area of the vehicle, a value indicative of a motional difference and/or a pose difference relative to the vehicle.

By way of example, in the example of Figure 5, the vehicle 200-1 is the vehicle under consideration, and each of the vehicles detected in the target area 400 of the vehicle 200-1 comprises vehicles 200-3 and 200-4. In this example, a value indicative of a motional difference and/or a pose difference relative to the vehicle 200-1 may be calculated for each of vehicles 200-3 and 200-4.

In such cases, the device 100 may, for example, associate the vehicle under consideration with a vehicle detected in the target area that has a value indicative of a lowest motional difference and/or pose difference from the vehicle under consideration.

The value indicative of a motional difference and/or a pose difference relative to the vehicle under consideration may be calculated in any suitable manner and may be based on any suitable absolute or relative values indicated of the motion or pose of a given vehicle detected in the target area of the vehicle under consideration.

More generally, value indicative of a motional difference and/or a pose difference relative to the vehicle may be defined so as to represent the likelihood that a vehicle under consideration, i.e. a follower, is and will continue to follow a certain target, i.e. a vehicle detected in the target area.

By way of example, the value indicative of a motional difference and/or a pose difference relative to the vehicle may, as in the present example embodiment, be calculated based on at least one of:

- a difference in direction relative to the vehicle;

- a difference in heading rate relative to the vehicle;

- a difference in distance relative to the vehicle;

- a difference in velocity relative to the vehicle; and

- a difference in acceleration relative to the vehicle.

A specific example for calculation of the value indicative of a motional difference and/or a pose difference relative to a vehicle under consideration will be described in relation to Figures 7A and 7B.

Figures 7A and 7B illustrate an exemplary traffic scenario, in which a vehicle 200-7 is changing lane in a curve. Furthermore, in the example of Figures 7A and 7B, vehicle 200-1 is a host vehicle and each of vehicles 200-1, 200-5, 200-6 and 200-7 are in turn analysed as the vehicle under consideration.

In the example of Figure 7A, for each of the vehicles under consideration, potential associated vehicles detected within the target area (not shown) are indicated by an arrow. In addition, the heading rate of each of the vehicles 200-1 and 200-5 to 200-9 is indicated by a bold arrow. The heading rate of vehicle 200-7 indicates its change in direction of travel as it changes lane.

In particular, vehicle 200-7 has been detected in the target area of vehicle 200-1. Vehicles 200-6 and 200-7 have been detected in the target area of vehicle 200-5. Vehicles 200-7 and 200-8 have been detected in the target area of vehicle 200-6. Vehicles 200-9 and 200-8 have been detected in the target area of vehicle 200-7.

The value f indicative of a motional difference and/or a pose difference relative to the vehicle may, as in the example of Figures 7A and 7B, be calculated using the following equation:

$$f = \frac{1}{|c_1 \times \Delta direction| + |c_2 \times \Delta heading\, rate| + |c_3 \times \Delta distance| + |c_4 \times \Delta speed| + |c_5 \times \Delta acceleration|}, \text{Eq. 3}$$

where *Δdirection* is a difference in direction relative to the vehicle, *Δheadingrate* is a difference in heading rate relative to the vehicle, *Δdistance* is a difference in distance relative to the vehicle, *Δspeed* is a difference in velocity relative to the vehicle, *Δacceleration* is a difference in acceleration relative to the vehicle, and each of $c_1$ to $c_5$ are weighting parameters for the respective differences.

The values of the weighting parameters may be determined based on the technical experience and knowledge of the vehicle in question.

Equation 3 is provided as a non-limiting example only. Alternatively, the value indicative of a motional difference and/or a pose difference relative to the vehicle may be defined without reference to one or more of the above parameters and/or may be based on one or more additional parameters included in the set of parameters determined for each detected vehicle.

In addition, Equation 3 is defined such that, as the motional and/or pose difference between two vehicles increases, the value of f decreases, such that a lower value of f is indicative of a higher difference in pose and/or motion relative to the vehicle under consideration. Alternatively, the value f may be defined such that a lower value of f is indicative of a higher difference in pose and/or motion relative to the vehicle under consideration.

Figure 7B shows a case in which, for each of vehicles 200-1, 200-5, 200-6 and 200-7, a value indicative of a motional difference and/or a pose difference relative to the vehicle under consideration is calculated and used to prioritize the vehicles detected in the target area of each vehicle under consideration.

In particular, vehicle 200-5 is associated with vehicle 200-6, as vehicle 200-6 has a most similar motion and pose to the vehicle under consideration. Vehicle 200-6 is associated with vehicle 200-8, as vehicle 200-8 has a most similar motion and pose to the vehicle under consideration. These associations are indicated by solid arrows in Figure 7B and the neglected potential associations for each vehicles 200-5 and 200-6 are indicated by dashed arrows. As such, a convoy comprising vehicles 200-5, 200-6 and 200-8 is identified.

The device 100 may, as in the present example embodiment, be configured to prioritize the vehicles detected in the target area by selecting only vehicles that meet a predetermined criterion based on the set of parameters determined for those vehicles. That is, as is shown in Figure 7B, the device 100 may, as in the present example embodiment, also be configured not to associate a vehicle under consideration with another vehicle, from among vehicles detected in the target area of that vehicle.

By way of example, neither of vehicles 200-1 and 200-7 are associated with another vehicle, even though potential associations existed due to the presence of other vehicles in the target area of vehicles 200-1 and 200-7.

In general, the reliability of convoys following the flow of traffic grows with its size and persistence, that is with its length in terms of number of vehicles and the period of time for which the convoy is consistently detected, respectively. Large, persisting convoys define the flow of traffic, while single-road user convoys can be used to distinguish divergence from the flow of traffic. These characteristics may be used to improve determination of the convoys.

By way of example, the device 100 may, as in the present example embodiment, be configured to determine that a vehicle detected in the target area meets the predetermined criterion only in a case where a difference in motion and/or a difference in pose from the vehicle under consideration is less than a respective threshold value.

For example, in the example of Figure 7B, as vehicle 200-7 is changing lane in a curve, vehicle 200-7 is not travelling so as to follow either of the vehicles 200-8 and 200-9, which are detected in its target area. As such, for both of vehicles 200-8 and 200-9, the value would be indicative of a relatively high motional difference and/or a pose difference relative to the vehicle 200-7. As such, these associations may be neglected for the purpose of determining the at least one convoy.

This may advantageously allow to avoid cases in which a convoy is determined based on unreliable associations between vehicles, which do not exhibit a sufficiently high likelihood that a vehicle under consideration, i.e. a follower, is and will continue to follow a certain target, i.e. a vehicle detected in the target area.

Additionally or alternatively, the device 100 may, as in the present example embodiment, be configured to determine that a vehicle detected in the target area meets the predetermined criterion only in a case where the single vehicle has been in the target area more than a threshold time value.

In particular, the process of Figure 4 may, as in the present example embodiment, be repeatedly performed by the device 100 at regular time steps or intervals and/or as new sensor data is acquired. The one or more time steps may also be referred to, for example, as time intervals.

By way of example, such time steps may be based on a clocking scheme and may represent a set time interval between each updated detection of the plurality of vehicles 200-1 and subsequent steps.

In such example embodiments, the device 100 may be configured to neglect a potential association between a vehicle under consideration and a particular vehicle detected in its target area, where that particular vehicle has not been repeatedly detected in the target area of the vehicle under consideration for at least a certain length of time, i.e. a threshold time value. The threshold time value may be defined by a number of time steps where the process of Figure 4 is repeated at regular intervals.

By way of example, in the example of Figure 7B, the combination of the curve in the road and vehicle 200-7 changing into the same lane as vehicle 200-1 results in vehicle 200-7 being detected in the target area of vehicle 200-1. In contrast, vehicles 200-5 and 200-6, which remain in the righthand lane, are not detected in the target area of vehicle 200-1. As such, the vehicle 200-7 would not have been detected in the target area of vehicle 200-1 until it begins to change lane.

Therefore, even if the instantaneous value indicative of a motional difference and/or a pose difference relative to the vehicle 200-1 may be relatively low, for example, less than the threshold value, the association between vehicles 200-1 and 200-7 may not be sufficiently reliable for the purpose determining the at least one convoy. Therefore, the potential association between vehicle 200-1 and vehicle 200-7 may be neglected for the purpose of determining the at least one convoy.

This may also advantageously allow to avoid cases in which a convoy is determined based on unreliable associations between vehicles, which do not exhibit a sufficiently high likelihood that a vehicle under consideration is and will continue to follow a certain vehicle detected in the target area.

Such threshold values may be set to any suitable value based on technical experience and knowledge of the vehicles in questions.

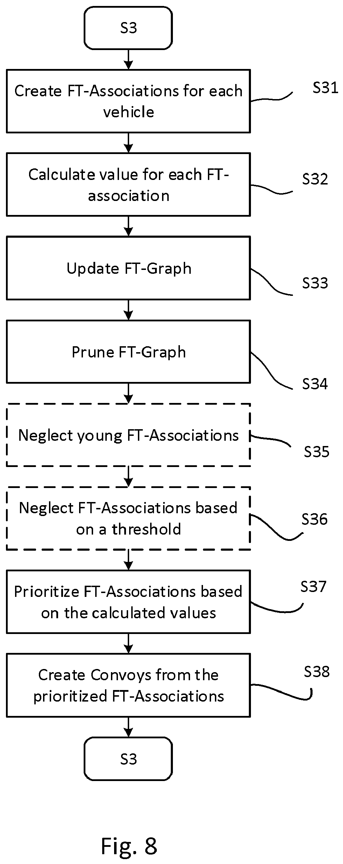

By way of more detailed example, Figure 8 is a flow diagram illustrating an exemplary process by which the determining unit 120 may determine the at least one convoy, each of the at least one convoy comprising two or more of the detected plurality of vehicles 200-1, based on the acquired sensor data.

In particular, in the exemplary process of Figure 8, a graph structure is used to keep track of potential associations between a vehicle under consideration, namely a follower, and a vehicle detected in the target area of the follow, namely a target. Such associations may be referred to as follower-target (FT) associations and the graph structure may be referred to as an FT-graph.

The exemplary process of Figure 8 may, as in the present example embodiment, be performed by the determining unit 120 of the device 100 of Figure 1.

In process step S31 of Figure 8, the determining unit 120 creates FT-associations for each vehicle. FT-Associations are created by performing a multi-target selection for each detected vehicle 200-i. Each vehicle 200-i is associated with all other vehicles within its target area.

In process step S32 of Figure 8, the determining unit 120 calculates a value indicative of a motional difference and/or a pose difference for each follow and target vehicle pair.

In process step S33 of Figure 8, the determining unit 120 updates the FT-graph. In particular, all FT-Associations are combined and stored in the FT-Graph. The FT-Graph is used to store, update and remove FT-associations over time.

In process step S34 of Figure 8, the determining unit 120 prunes the FT-graph. By way of example, each FT-Association in the FT-Graph that is re-occurring over time accumulates an age, i.e. a period of time for which that FT-association is consistently or repeatedly detected. As such, FT-associations that are not updated are removed after a certain amount of time during a FT-graph pruning process.

In process steps S25 to S28 of Figure 8, convoys are extracted from the FT-Graph. A convoy consists of a chain of FT-Associations, where each follower can only have one target and each target can only have one follower.

In particular, in process step S35 of Figure 8, the determining unit 120 neglects young FT-associations for the purpose of determining the at least one convoy. That is, the determining unit neglects, for example, FT associations that re-occur over time for less than a threshold time value.

In process step S36 of Figure 8, the determining unit 120 neglects, for the purpose of determining the at least one convoy, FT-associations for which the value indicative of a motional difference and/or a pose difference is less than a threshold value.

In process step S37 of Figure 8, the determining unit 120 prioritizes the remaining FT-Associations based on their value indicative of a motional difference and/or a pose difference relative to the follower vehicle. By way of example, a FT-association having a value indicative of a lowest motional difference and/or a pose difference between the target and follower vehicles may be given a highest priority among the FT-associations for a particular vehicle under consideration.

In process step S38 of Figure 8, the determining unit 120 creates convoys from the prioritized FT-associations. That is, one or more chain of FT-Associations corresponding to one or more convoys may be extracted from the graph, where each follower can only have one target and each target can only have one follower.

The convoy extraction process may be performed uniquely each time convoys are extracted from the FT-Graph and does not affect the internal state of the FT-Graph itself.

Similar to the discussion above in relation to process step S1 above, in cases where the determining unit 120 determines that no convoys are determinable from the data acquired from the at least one sensor system of at least one vehicle, the detecting unit 110 may, for example, be configured to repeat acquiring data and detecting vehicles from the data and the determining unit 120 may be configured to repeat determining at least one convoy based on the acquired sensor data until at least one convoy is determined. Such repeating may be performed at regular time intervals or irregularly as new data becomes available from the at least one sensor system of the at least one vehicle.

In the above examples, the at least one traffic flow characteristic determined by the determining unit 120 comprises at least one convoy. Additionally or alternatively, determining the at least one traffic flow characteristic may comprise identifying one or more road paths of a road.

The determining unit 120 may, for example, be configured to identify a road path corresponding to one or more of the plurality of detected vehicles. By way of examples, the movement of each of the plurality of detected vehicles may be used to estimate a potential road path that may be followed by the host vehicle.

Alternatively, road paths may be identified based on a subset of the plurality of detected vehicles only. For example, a detection period of each detected vehicle may be calculated, the detection period being an amount of time for which that vehicle is consistently or repeatedly detected from the acquired sensor data. In particular, the process of Figure 4 may, as in the present example embodiment, be repeatedly performed by the device 100 at regular time steps or intervals and/or as new sensor data is acquired. In such example embodiments, the detection period of a vehicle may be defined by a number of time steps where the process of Figure 4 is repeated at regular intervals, for which a particular vehicle is repeatedly identified in the surrounding environment of the host vehicle. The determining unit 120 may be configured to only identify road paths corresponding to detected vehicles having a detection period greater than a certain threshold or to a particular number of oldest detected vehicles as this may help to avoid identifying road paths of vehicles moving in an opposite direction to the host vehicle.

Additionally or alternatively, determining unit 120 may be configured to only identify road paths corresponding to detected vehicles having a same or similar, e.g. parallel, direction of travel to the host vehicle or at least one other vehicle. This may help to avoid identifying road paths based on vehicles changing lanes or otherwise diverging from the flow of traffic.

Additionally or alternatively, in example embodiments in which the at least one characteristic determined by the determining unit 120 comprises both at least one convoy and one or more road paths of a road, the one or more road paths may be identified so as to correspond to the at least one convoy respectively.

In example embodiments where the determining unit 120 identifies one or more road paths, the process of Figure 4 may optionally comprise an additional process step of comparing a model of the road comprising a plurality of lanes to the identified one or more road paths and updating the model of the road based on the comparison.

By way of example, the device 100 or the ADAS may be configured to generate or to receive from any suitable entity, a high-level environment model describing the road on which the vehicle is travelling and the traffic on it. Such an environment model may be defined by any suitable means, such as, for example, a global coordinate system (GCS), a lane coordinate system (LCS) or a grid model or such that the position of a vehicle in which the ADAS is mounted relative to other objects (e.g. boundaries of the road and lanes, other vehicles, etc.) may be defined over time and as the position of vehicles changes.

By way of example, the environment model may be defined in an LCS. The LCS may be a two-dimensional curvilinear coordinate system adapted to reflect a road on which the model is based. In particular, a curvilinear coordinate system constituting the LCS may have two axes, namely a longitudinal axis or x-axis, which extends in a longitudinal direction along the road, and a lateral axis or y-axis, which extends across the road. The x-axis is always parallel to the lanes of the road and the y-axis is orthogonal to the x-axis at every value of x. The x-axis of the LCS may be defined to increase in the direction of forward travel of the vehicle and the y-axis of the LCS to increasing in the direction of the left-most lane of the road. However, the LCS may be orientated in any other suitable way. The LCS and thus the model may, however, be defined in other ways, for example using a Cartesian coordinate system.

Objects may be defined in the environment model in any suitable way for the coordinate system used, e.g. as a (programming) object having dynamic properties or by one or more cells of a grid having dynamic properties. Distances between various objects in the environment model may be determined based on the lateral and longitudinal positions of said objects in the environment model. The lateral and longitudinal positions of objects in the environment model may, for example, be defined with respect to a centre of a bounding box of the object or in relation to any other predefined reference point of the object such as, for example, a predetermined corner of the bounding box, a centre of mass or a centroid of the object, etc.

By way of example, the model of the road may be updated by updating the position of boundaries of one or more lanes within the model relative to the vehicle so that the plurality of lanes in the model are consistent with the identified one or more road paths. This may advantageously allow a model of the road with more accurate positioning to be obtained relative to a traditionally derived model of the road based on identification of lane markings.

By way of further example, the process of Figure 4 may optionally comprise an additional process step of generating a new model of the road based on the identified one or more road paths. This may advantageously allow a model of the road for use by ADAS and AD functionalities to be obtained without requiring any identification of lane markings or defining the environment of the host vehicle in relation to a host lane.

Additionally or alternatively, determining the at least one traffic flow characteristic may comprise determining a vehicle 200-i among the plurality of vehicles 200-1 that follows the traffic flow and/or determining a vehicle 200-i among the plurality of vehicles 200-1 that diverges from the traffic flow.

By way of example, the determining unit 120 may be configured to determine whether a particular vehicle follows or diverges from the traffic flow based on the motion and pose of that vehicle relative to the host vehicle and/or to one or more other detected vehicles. For example, if a vehicle that previously travelled in a parallel direction of travel to the host vehicle starts to move towards or away from the host vehicle, this may be an indication that the vehicle is diverging from the flow of traffic by changing lanes or other such manoeuvres. The detection period of the vehicle and the other detected vehicles may also be taken into account.

Additionally or alternatively, in example embodiments in which the at least one traffic flow characteristic determined by the determining unit 120 comprises both at least one convoy and a vehicle 200-i among the plurality of vehicles 200-1 that follows the traffic flow, the determining unit 120 may be configured to determine that a vehicle 200-i follows the traffic flow in a case where the vehicle 200-i among the plurality of vehicles 200-1 is comprised in a convoy.

Additionally or alternatively, in example embodiments in which the at least one traffic flow characteristic determined by the determining unit 120 comprises both at least one convoy and a vehicle 200-i among the plurality of vehicles 200-1 that diverges from the traffic flow, the determining unit 120 may be configured to determine that a vehicle 200-i diverges from the traffic flow in a case where the vehicle 200-i among the plurality of vehicles 200-1 is not comprised in a convoy. Preferably, the determining unit 120 may determine, for each vehicle 200-i that diverges from the traffic flow, whether the vehicle 200-i is moving from one road path to another based on the at least one convoy in a case where one or more road paths are also identified in step S3 of Figure 4.

In the exemplary implementations of process step S3 of Figure 4 set out above, the determining unit 120 determines the at least one traffic flow characteristic using various rule based approaches. Alternatively, in some example embodiments, the determining unit 120 may use a suitably trained machine learning algorithm to determine the at least one traffic flow characteristic.

By way of example, a machine learning algorithm may be trained using any suitable form of supervised learning known to those skilled in the art based on training data in which an input of a plurality of detected vehicles is associated with an output of at least one traffic flow characteristic. Alternatively, a machine learning algorithm may be trained using any suitable unsupervised training means known in the art. Furthermore, such a machine learning algorithm may also be trained to receive additional data as input such as, for example, the set of parameters determined for each vehicle, such as acceleration and velocity, the age of a detected vehicle or convoy, etc.

Returning to Figure 4, in process step S4 of Figure 4, the determining unit determines, based on the determined at least one traffic flow characteristic, an adjustment of at least one control functionality of an advanced driving assistance system.

By way of example, in example embodiments in which determining the at least one traffic flow characteristic comprises identifying one or more road paths of a road, the adjustment of the at least one control functionality of the advanced driving assistance system may, as in the present example embodiment, comprise controlling, by the advanced driving assistance system, a host vehicle to follow one of the identified one or more road paths.

For example, the adjustment of the at least one control functionality of the ADAS may comprise controlling the acceleration and/or steering of the host vehicle in order to cause the vehicle to follow an identified road path. Additionally or alternatively, the adjustment of the at least one control functionality of the ADAS may comprise controlling the host vehicle to follow, as its intended route, the route of one of the at least one determined convoys and/or to follow a route of a determined vehicle among the plurality of vehicles that follows the traffic flow.

By way of further example, being able to distinguish between road users that follow the flow of traffic, and those that do not, i.e. diverge from the flow of traffic, has advantages for the usage of either class:

- Ignoring road users that diverge from the flow of traffic leads to more reliable observations of the flow of traffic or for defining drivable road paths on a road. In-turn a reliable estimate of the current traffic flow can be used to navigate traffic scenarios where there are no lane markings, no information about the existing lane markings or when existing lane markings are obsolete.
- Identifying road users that do not follow the flow of traffic may facilitate identifying occurring traffic events, such as a vehicle cutting into a lane, or vehicles entering and exiting the road. Consequently, a lower reaction time can be achieved for critical events, increasing the safety and comfort of ADAS and AD features.

For example, in example embodiments in which determining the at least one traffic flow characteristic comprises identifying a vehicle among the plurality of vehicles that diverges from the traffic flow, the adjustment of the at least one control functionality of the advanced driving assistance system may, as in the present example embodiment, comprise controlling, by the ADAS, braking and/or deceleration of a host vehicle.

As described in detail in relation to Figure 1 above, the ADAS to which information indicative of the adjustment is output may be an ADAS provided in a same vehicle as the device 100, an ADAS provided in a vehicle which communicates with the device 100 provided in a server or cloud based system, etc. In addition, as described in detail in relation to Figure 1 above, information indicative of the adjustment may also be output to more than one ADAS in a corresponding number of vehicles. Accordingly, the vehicle to be controlled as the host vehicle will be dependent on the ADAS to which information indicative of the adjustment is output and may not necessarily be the host vehicle in respect of which the at least one traffic flow characteristic was determined.

In example embodiments, such as the present example embodiment in which the at least one traffic flow characteristic comprises at least one convoy, the device 100 may be configured not use all of the convoys determined in process step S3 of Figure 4 in determining the adjustment. By way of example, one of the determining unit 120, the outputting unit 130 or a dedicated unit of the device 100 (not shown) may be configured to perform further processing in order to determine which, if any, of the determined convoys should be used.

By way of example, one or more characteristics of each convoy may be compared to one or more respective thresholds in order to determine whether that convoy is sufficiently reliable.

For example, a detection period of each convoy may be calculated. In particular, the process of Figure 4 may, as in the present example embodiment, be repeatedly performed by the device 100 at regular time steps or intervals and/or as new sensor data is acquired. In such example embodiments, the detection period of a convoy may be the length of time, which may be defined by a number of time steps where the process of Figure 4 is repeated at regular intervals, for which a particular convoy comprising two or more particular vehicles has been repeatedly identified. Additionally or alternatively, a length of each convoy may be determined as a number of vehicles in said convoy.

It may be appreciated that a convoy having a relatively large length and/or detection period may be likely to be particularly reliable for estimating the flow of traffic relative to shorter and/or younger convoys. Therefore, in such example embodiments, a convoy may only be selected for output where one or both of its detection period and its length is greater than or equal to a respective threshold value.

Additionally or alternatively, only the n best convoys in terms of detection period or length may be output among the at least one convoy determined, where n is an integer greater than or equal to one. In such example embodiments, in a case where the number of convoys determined is less than n, all of the convoys determined may be output. Alternatively, in a case where the number of convoys determined as exceeding any relevant thresholds is less than n, all of the convoys meeting these requirements may be output by the outputting unit 130.

The present disclosure aims to offer a solution to issues identified with the conventional approaches. The general idea is to associate or disassociate vehicles as part of the general flow of traffic. In particular, individual vehicles that diverge from the traffic flow should not become associated with any convoy or identified as following the traffic flow, and vice-versa. Thus, the convoys, road paths or other determined characteristics can be seen as pieces that together represent the traffic flow.

In other words, this approach assesses the surrounding vehicles' pose and motion relative to each other, rather than to the host lane, to determine their relevance and criticality. This is realized by identifying and tracking vehicles on the road.

By way of example, in the schematic illustration of Figure 5, a scenario is shown in which a vehicle 200-7 ahead of a host vehicle 200-1 is cutting into the host vehicle path, i.e. the left-hand lane.

In this scenario, the knowledge of the mapped convoy, i.e. that comprising vehicles 200-5, 200-6 and 200-8, can be used to identify the critical vehicle, namely vehicle 200-7, and the adjacent road path, namely the righthand lane. Furthermore, knowledge of the convoy comprising vehicles 200-5, 200-6 and 200-8 can be used to determine that the critical vehicle 200-7 is diverging from the adjacent road path into the road path of the host vehicle 200-1.

Taking vehicle 200-1 as the host vehicle, such information may result in the device 100 determining an adjustment of at least one control functionality of an ADAS comprising controlling vehicle 200-1 to brake or decelerate in response to the movement of critical vehicle 200-7.

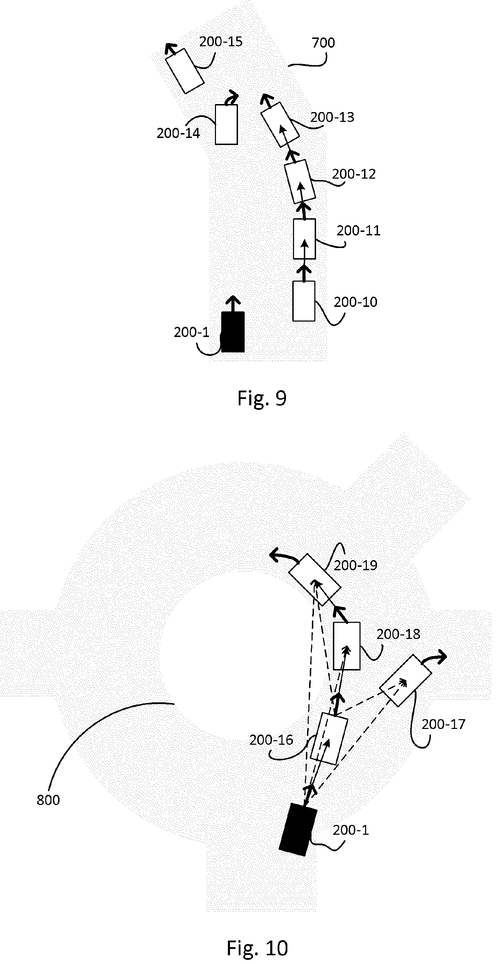

By way of further example, Figures 9 to 11 illustrate a number of exemplary use cases for the approach of the present disclosure.

Figure 9 is schematic illustration showing a scenario in which a vehicle 200-14 ahead of the host vehicle 200-1 in the same road path, i.e. the left-hand lane of road 700, is diverging from the flow of traffic. In particular, vehicle 200-14 is changing lane from the host lane into the adjacent lane of road 700.

The knowledge of the diverging vehicle 200-14 highlights the second vehicle 200-15 ahead in the host vehicle 200-1 might be of interest.

Furthermore, by utilizing the knowledge of the adjacent convoy comprising vehicles 200-10, 200-11, 200-1 and 200-13, it may be identified that the diverging vehicle 200-14 is performing a cut-manoeuvre to a road path corresponding to this convoy, namely the righthand lane. As such, an ADAS controlling the host vehicle may determine that the vehicle 200-14 might start to slow down as it executes this manoeuvre and that the host vehicle may need to react by reducing its speed.

As such, taking vehicle 200-1 as the host vehicle, such information may result in the device 100 determining an adjustment of at least one control functionality of an ADAS comprising controlling vehicle 200-1 to brake or decelerate in response to the movement of critical vehicle 200-14 and/or controlling, for example, one or more of the direction, heading rate, acceleration and velocity of vehicle 200-1 so that it follows the route of vehicle 200-15.

Figure 10 is schematic illustration showing a scenario in which vehicles 200-1 and 200-16 to 200-19 navigate a roundabout 800, where one vehicle 200-17 is exiting early.

In this scenario, information about the convoy comprising vehicles 200-16, 200-18, 200-19 and the host vehicle 200-1 itself can be used to identify how to manoeuvre through the complex road-geometry.

For example, taking vehicle 200-1 as the host vehicle, the device 100 determining an adjustment of at least one control functionality of an ADAS comprising controlling vehicle 200-1 to brake or decelerate in response to the movement of vehicle 200-16 and/or controlling, for example, one or more of the direction, heading rate, acceleration and velocity of vehicle 200-1 so that it follows the route of vehicle 200-16 or vehicle 200-17.

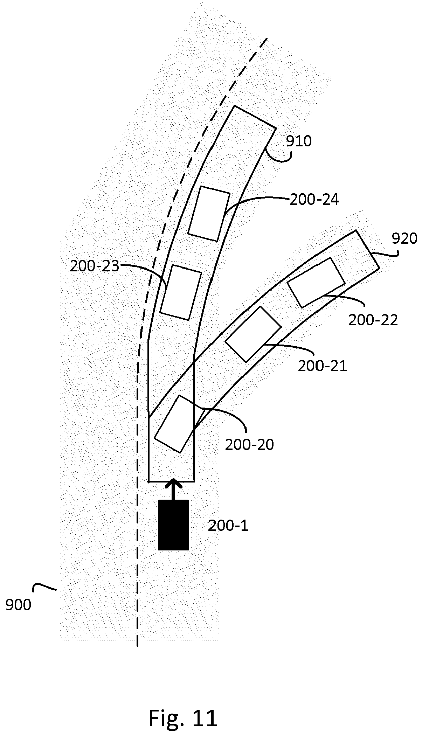

Figure 11 is schematic illustration showing a scenario in which there are two diverging road paths, indicated by reference signs 910 and 920, ahead of the host vehicle 200-1 travelling on road 900. Vehicles 200-23 and 200-24 are following the left-hand road path 910 and vehicles 200-20, 200-21 and 200-22 are following the righthand road path 920.

In this scenario, information about the convoy comprising vehicles 200-20, 200-21 and 200-22 and information about the convoy comprising vehicles 200-23 and 200-24 allows the ADAS of the host vehicle 200-1 to identify two potential and diverging road paths 910 and 920. This may be achieved despite the difference in curvature between these road paths. As such, taking vehicle 200-1 as the host vehicle, such information may result in the device 100 determining an adjustment of at least one control functionality of an ADAS comprising controlling, for example, one or more of the direction, heading rate, acceleration and velocity of vehicle 200-1 so that it follows one of road paths 910 and 920.

In conclusion, the present application presents solutions to problems arising in conventional approaches used ADAS and AD applications. Firstly, the present disclosure may provide a solution to distinguish relevant and critical road users without information about the host lane. Secondly, the present disclosure provides a solution to map the flow of traffic, which in-turn presents an alternative solution to lane centring and automatic lane changes that does not require information about lane markings. That is, the possibility to follow and adapt to a convoy directly, or to utilize the knowledge of convoys to map the lanes of a road.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein.

Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way. It is also to be understood that any procedures recited in the claims need not be performed in the order presented.

While this specification contains many specific embodiment details, these should not be construed as limitations on the scope of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

**Claims**

1. A computer-implemented method for determining at least one traffic flow characteristic around a host vehicle, the method comprising:

   detecting a plurality of vehicles in a surrounding environment of the host vehicle from data acquired from at least one sensor system of the host vehicle and/or at least one sensor system located in the surrounding environment of the host vehicle;
   determining from the acquired sensor data a set of parameters for each of the detected vehicles comprising a parameter indicative of the pose of the detected vehicle and a parameter indicative of the motion of the detected vehicle;
   determining the at least one traffic flow characteristic based on the set of parameters obtained for the plurality of vehicles; and
   determining, based on the determined at least one traffic flow characteristic, an adjustment of at least one control functionality of an advanced driving assistance system.

2. The computer-implemented method according to claim 1, wherein determining the at least one traffic flow characteristic comprises at least one of:

   identifying one or more road paths of a road;

determining at least one convoy, each of the at least one convoy comprising two or more of the detected plurality of vehicles;

determining a vehicle among the plurality of vehicles that follows the traffic flow; and

determining a vehicle among the plurality of vehicles that diverges from the traffic flow.

3. The computer-implemented method according to claim 1 or claim 2, wherein:

determining the at least one traffic flow characteristic comprises identifying one or more road paths of a road; and the adjustment of the at least one control functionality of the advanced driving assistance system comprises controlling, by the advanced driving assistance system, a host vehicle to follow one of the identified one or more road paths.

4. The computer-implemented method of any preceding claim, wherein determining the at least one traffic flow characteristic comprises identifying one or more road paths of a road, and the method further comprises:

comparing a model of the road comprising a plurality of lanes to the identified one or more road paths and updating the model of the road based on the comparison; or

generating a new model of the road based on the identified one or more road paths.

5. The computer-implemented method according to any preceding claim, wherein determining the at least one traffic flow characteristic comprises determining at least one convoy, and the method further comprises:

determining, in a case where a vehicle among the plurality of vehicles is comprised in a convoy, that the vehicle follows the traffic flow; and/or

determining, in a case where a vehicle among the plurality of vehicles is not comprised in a convoy, that the vehicle diverges from the traffic flow and, preferably, determining, for each vehicle that diverges from the traffic flow, whether the vehicle is moving from one road path to another based on the at least one convoy.

6. The computer-implemented method according to any preceding claim, wherein determining the at least one traffic flow characteristic comprises determining at least one convoy, and the method further comprises, for each vehicle of the plurality of vehicles:

determining a target area in the surrounding environment of that vehicle; and

associating that vehicle with another vehicle, from among vehicles detected in a target area of that vehicle.

7. The computer-implemented method of claim 6, wherein
for each vehicle of the plurality of vehicles, the target area extends in a predetermined direction in relation to that vehicle.

8. The computer-implemented method of claim 6 or claim 7, wherein for each vehicle of the plurality of vehicles, the target area is variably defined based on the set of parameters determined for that vehicle.

9. The computer-implemented method according to any of claims 6 to 8, wherein:
associating each vehicle of the plurality of vehicles with another vehicle comprises prioritizing the vehicles detected in the target area based on the set of parameters determined for those vehicles.

10. The computer-implemented method according to claim 9, wherein prioritizing the vehicles detected in the target area comprises selecting only vehicles that meet a predetermined criterion based on the set of parameters determined for those vehicles.

11. The computer-implemented method according to claim 10, wherein the set of parameters determine for each detected vehicle comprises a detection period indicative of an amount of time for which that vehicle is detected from the acquired sensor data, and the predetermined criterion is based on the detection period.

12. The computer-implemented method according to any of claims 9 to 11, wherein prioritizing the vehicles detected in the target area comprises:
calculating, for each of the vehicles detected in the target area of the vehicle, a value indicative of a motional difference and/or a pose difference relative to the vehicle.

**13.** The computer-implemented method according to claim 12, wherein the value indicative of a motional difference and/or a pose difference relative to the vehicle is calculated based on at least one of:

    a difference in direction relative to the vehicle;
    a difference in heading rate relative to the vehicle;
    a difference in distance relative to the vehicle;
    a difference in velocity relative to the vehicle; and
    a difference in acceleration relative to the vehicle.

**14.** A computer program comprising instructions which, when executed by a computer, cause the computer to carry out the method of any of claims 1 to 13.

**15.** A device for determining at least one traffic flow characteristic around a host vehicle, wherein the device is configured to perform the method of any of claims 1 to 13.

**16.** A host vehicle comprising:

    a device according to claim 15; and
    at least one of: at least one sensor system and an advanced driving assistance system.

Fig. 1

Fig. 2

Fig. 3

START

Detect a plurality of vehicles in a surrounding environment of the host vehicle from data acquired from at least one sensor system of the host vehicle and/or at least one sensor system located in the surrounding environment of the host vehicle

S1

Determine from the acquired sensor data a set of parameters for each of the detected vehicles comprising a parameter indicative of the pose of the detected vehicle and a parameter indicative of the motion of the detected vehicle in relation to the host vehicle

S2

Determine the at least one traffic flow characteristic based on the set of parameters obtained for the plurality of vehicles

S3

Determine, based on the determined at least one traffic flow characteristic, an adjustment of at least one control functionality of an ADAS

S4

END

Fig. 4

400

200-4

200-3

410

410

200-2

200-1

Fig. 5

Fig. 6

Fig. 7A                Fig. 7B

**Fig. 8**

Fig. 9

Fig. 10

Fig. 11

Europäisches
Patentamt

European
Patent Office

Office européen
des brevets

# EUROPEAN SEARCH REPORT

Application Number

EP 22 18 1235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/210378 A1 (GUNARATNE PUJITHA [CA]) 27 July 2017 (2017-07-27) <br> * paragraph [0010] * <br> * paragraph [0017] * <br> * paragraph [0026] * <br> * paragraph [0053] * <br> * paragraph [0058] * <br> * paragraph [0082] * <br> * paragraph [0084] * <br> * figures 2, 4A-4C * <br> ----- | 1-16 | INV. <br> G08G1/01 <br> G08G1/052 <br> B60W30/095 |
| A | US 2018/046191 A1 (KELLER MARTIN [DE] ET AL) 15 February 2018 (2018-02-15) <br> * paragraph [0027] - paragraph [0029] * <br> * paragraph [0031] * <br> * paragraph [0114] * <br> * paragraph [0123] - paragraph [0127] * <br> * paragraph [0131] * <br> * figures 1, 3 * <br> ----- | 2,5-11, 13 | |
| A | US 10 852 733 B1 (FERGUSON DAVID I [US] ET AL) 1 December 2020 (2020-12-01) <br> * figures 9, 16 * <br> ----- | 4 | TECHNICAL FIELDS SEARCHED (IPC) <br><br> B60W |
| A | EP 2 845 779 A1 (HONDA RES INST EUROPE GMBH [DE]) 11 March 2015 (2015-03-11) <br> * paragraph [0072] * <br> ----- | 2,5 | |

The present search report has been drawn up for all claims

| Place of search | Date of completion of the search | Examiner |
|---|---|---|
| The Hague | 13 December 2022 | Stark, Konrad |

EPO FORM 1503 03.82 (P04C01)

## ANNEX TO THE EUROPEAN SEARCH REPORT
## ON EUROPEAN PATENT APPLICATION NO.

EP 22 18 1235

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2022

| Patent document cited in search report | | Publication date | Patent family member(s) | | Publication date |
|---|---|---|---|---|---|
| US 2017210378 | A1 | 27-07-2017 | NONE | | |
| US 2018046191 | A1 | 15-02-2018 | CN | 107719365 A | 23-02-2018 |
| | | | DE | 102016009763 A1 | 15-02-2018 |
| | | | EP | 3281830 A1 | 14-02-2018 |
| | | | US | 2018046191 A1 | 15-02-2018 |
| US 10852733 | B1 | 01-12-2020 | US | 8825265 B1 | 02-09-2014 |
| | | | US | 9459625 B1 | 04-10-2016 |
| | | | US | 10012991 B1 | 03-07-2018 |
| | | | US | 10852733 B1 | 01-12-2020 |
| | | | US | 11402841 B1 | 02-08-2022 |
| EP 2845779 | A1 | 11-03-2015 | EP | 2845779 A1 | 11-03-2015 |
| | | | JP | 6822752 B2 | 27-01-2021 |
| | | | JP | 2015051761 A | 19-03-2015 |
| | | | US | 2015073662 A1 | 12-03-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. LIU.** In Fused Front Lane Trajectory Estimation Based on Current ADAS Sensor Configuration. *2020 4th CAA International Conference on Vehicular Control and Intelligence (CVCI),* 2020, 124-129

- **S. -K. PARK.** Lane estimation using lateral histogram in radar based ACC system. *2014 11th European Radar Conference,* 2014, 193-196
- **D. J. KIM.** Lane Change Intention Classification of Surrounding Vehicles Utilizing Open Set Recognition. *IEEE Access,* 2021, vol. 9, 57589-57602